# EUROPEAN PATENT APPLICATION

(11) **EP 4 844 477 A1**
(43) Date of publication of application: **25.11.2026**
(21) Application number: 25177335.4
(22) Date of filing: 19.05.2025
(51) Int. Cl.: G02F 1/163, G02C 7/10

(54) **METHOD SUITABLE FOR DRIVING AN ELECTROCHROMIC EYEWEAR LENS, DRIVER DEVICE, AND SPECTACLES**

(71) Applicant: Carl Zeiss Vision International GmbH, 73430 Aalen (DE)
(72) Inventor: KARIM, Waiz, 73430 Aalen (DE); DONGMO, Saustin, 73430 Aalen (DE); ROTH, Matthias, 07745 Jena (DE)
(74) Representative: Kraus & Lederer PartGmbB

(57) **Abstract**

Methods suitable for driving an electrochromic eyewear lens are provided. The electrochromic eyewear lens comprises electrochromic material between electrodes. For charging the electrodes, a constant driving voltage followed by application of a current via a current-limiting element is applied. For discharging the electrodes, the electrodes are short-circuited, followed by application of a negative refreshing voltage.

## Description

The present application relates to methods suitable for driving electrochromic eyewear lenses and corresponding driver devices. Furthermore, the application relates to spectacles including such a driver device and electrochromic eyewear lenses.

It is desirable to adapt the optical transmission of spectacle lenses, in particular ophthalmic lenses used for vision correction, to environmental lighting conditions, such that they become darker in bright light (for example full sunlight) and fully transparent in poor lighting conditions. One solution to this problem are photochromic lenses, which change their transmission based on their exposure to ultraviolet (UV) radiation, becoming darker (lower transmission) with higher exposure to UV radiation.

However, photochromic lenses have disadvantages. For example, a wearer of corresponding spectacles has no possibility to influence the transmission, but the transmission is fully controlled by ambient UV radiation. This may for example be disadvantageous when driving a car with bright sunlight outside, as the windows of the cars like the windshield block the UV radiation, such that despite bright lighting conditions the lenses essentially stay at full transmission. Furthermore, the transmission is temperature-dependent, and photochromic lenses tend not to reach very low transmission levels at high temperatures, such that for example on a hot and bright summer day the transmission may stay comparatively high. Finally, the reaction time of many photochromic lenses is slow, such that the transmission changes only slowly when the ambient lighting conditions change.

To solve at least some of these problems, electrochromic lenses can be used. Generally, electrochromic materials change their transmission depending on an applied voltage. By incorporating such electrochromic material into a lens and by providing a controller for applying voltages, a user controlled transmission of such lenses may be obtained. The state change of electrochromic lenses also tends to be faster than for photochromic lenses.

Currently, sunglasses are commercially available using liquid crystal-based or gel-based organic electrochromic materials. Such materials and lenses are described for example in JP 2024-068961 A, WO 2023/081 667 A1, WO2022/165 8676A1, WO2022/165 867A1, US9 274 395 B2 or US 6 033 592 A.

Such materials have the disadvantage of a strong temperature dependence and also need to have a voltage or current applied permanently and are therefore highly energy consuming. Furthermore, some conventional approaches for providing variable transmission, namely liquid crystals, require polarized light. Since ambient light is unpolarized, this means a maximum transmission of about 50%. This makes such approaches less suitable for lenses that are also to be used indoors, where a high transmission (e.g. >85%) is desirable. Consequently, such materials are less suitable for ophthalmic lenses providing also vision correction, which tend to be used daily and essentially all the time in contrast for example to sunglasses and therefore would require power all the time. An alternative electrochromic technology is referred to as solid state electrochromic technology. This technology can provide a broad range of transmission and has a memory effect, i.e. a voltage or current need not be applied permanently. Such solid state electrochromic devices are typically multilayer stacks including at least one layer of electrochromic material, for example a polymer electrolyte, an ion conductor that allows ions such as lithium ions or Potassium ions to move through it into and out from the electrochromic material to cause the optical property change, and transparent conductor layers such as transparent conducting oxides like indium tin oxide, ITO as electrodes. Such devices are for example described in detail in US11 754 901 B2.

Conventionally, for controlling the transmission of such electrochromic devices, a pulse-based control may be used, where electrical pulses having a certain voltage are applied to electrodes of the above-mentioned multilayer stacks for charging and discharging of the same. Pulse-based control schemes are for example described in US 11 227 522 B2 and US 8 902 486 B1.

Controlling such solid state electrochromic lenses faces various constraints. For examples, in typical materials used the range of voltage which can be safely applied to the lens without degradation is in a relatively small range, for example between -1 V and +2 V. Therefore, the voltage cannot be used to control the speed of transmission change or the transmission beyond these limits without degradation. Furthermore, after applying a charging or discharging pulse to charge or discharge the material stack, the lens voltage typically takes time to settle. Typical values for such a settling times are between 300 ms to 500 ms.

For lens applications, in particular ophthalmic lens applications, the transparent conductor layers mentioned above, for example ITO layers, should be very thin to achieve a high transparency. Moreover, thicknesses of ITO electrodes limited to a thickness between 50 nm to 500 nm can help to suppress fissure formation, i.e. cracking during bending of the above mentioned multilayer stack to adapt to different curvature of lenses, in particular ophthalmic lenses.

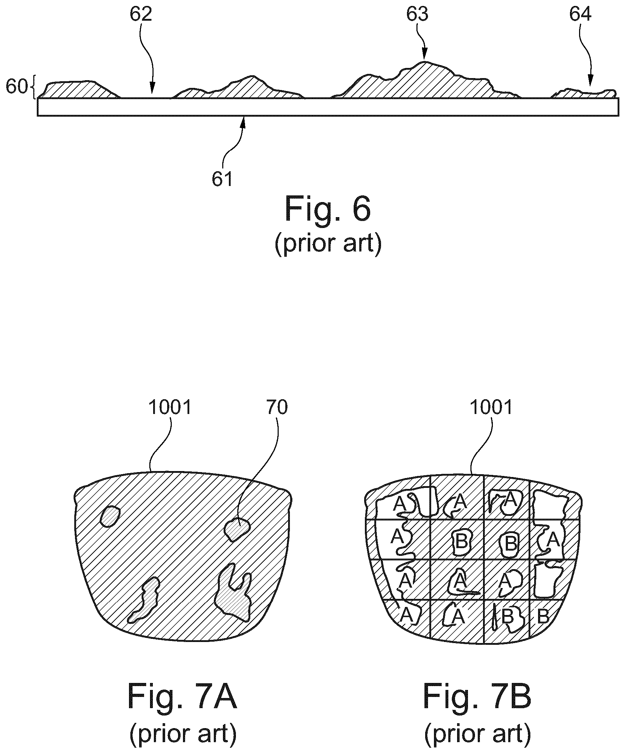

Various techniques such as vacuum vapor deposition, sputtering, ion-plating or chemical vapor deposition (CVD) can be used for deposition of an ITO layer, as described, for example, in WO 2022/200920 A1 or in M. Mazur, D. Kaczmarek, J. Domaradzki, D. Wojcieszak, S. Song and F. Placido, "Influence of thickness on transparency and sheet resistance of ITO thin films," The Eighth International Conference on Advanced Semiconductor Devices and Microsystems, Smolenice, Slovakia, 65-68 (2010). In practice, having a consistent thickness deposition of a very thin layer of ITO over a large area, for example an 80 mm diameter spectacle lens, can be a challenge, resulting in different sheet resistances, as described for example in Kim MJ. "A Study on Optimal Indium Tin Oxide Thickness as Transparent Conductive Electrodes for Near-Ultraviolet Light-Emitting Diodes", Materials (Basel) 16(13):4718 (2023). Different sheet resistance combined with inhomogeneous adsorption of electrochomic dye in such cases may result in an inhomogeneous impedance distribution on the transparent electrode surface. This is illustrated in Fig. 6. Fig. 6 shows an ITO layer 60 deposited on a substrate 61. The other explained effects may lead to a lack of ITO layer at some locations, as indicated by an arrow 62, by a thicker layer ITO layer in some locations, as indicated by an arrow 63, or a thinner ITO layer portion, as indicated by an arrow 64, and therefore overall to an inhomogeneous distribution. Furthermore, accidental dust deposition on such a thin ITO layer may influence the connection with dye molecules of an electrochromic lens.

This may lead to various undesirable cosmetic appearances when switching an electronic lens between a dark state (low transmission) and a transparent state (high transmission). For example, Fig 7A illustrates a spectacle lens 1001 with different cosmetic appearances, as indicated by areas 70, and Fig. 7B illustrates a spectacle lens 1001 with varying colour distributions, as marked with areas "A" and "B" which have different colours. Generally, solid state electrochromic devices are highly sensitive to the resistance or impedance of the electrodes since the solid state phase used here impedes ion movements or diffusion required by charge balance, such that here an inhomogeneous distribution for example of ITO has a stronger effect than for liquid or gel based electrochromic materials.

Special driving protocols for solid state electrochomic materials are known for example from EP 3 712 695 A1 or JP 2024 058496 A. Here, variable voltage pulses are used for controlling the transmission level of the electrochromic material. US 2019/0221148 A1 discloses a driving protocol starting with a controlled current regime and then continuing with a controlled voltage regime. However, the above issues of inhomogeneities and colour changes are not fully addressed.

Therefore, it is an object to provide a method suitable for driving an electrochromic eyewear lens including an electrochromic material and a corresponding driver device which at least reduces the occurrence of different cosmetic appearances in a dark state and of inhomogeneous colour distribution.

According to a first aspect, a method suitable for driving an electrochromic eyewear lens comprising electrochromic material between electrodes is provided, comprising, for charging or discharging the electrodes to a predefined voltage level above a fully discharged state:
- applying one selected from a group consisting of a constant charging voltage, constant discharging voltage or short circuit to the electrodes, characterized by
- applying a current via a current limiting element to the electrodes after applying the one of the constant charging voltage, constant discharging voltage or short circuit.

Typically, the higher the predefined level of charging above the fully discharged state is, the lower the transmission is. The fully discharged state then corresponds to maximum transmission, also referred to as clear state, and corresponds to zero voltage between the electrodes, i.e. both electrodes on the same potential. The predefined level therefore corresponds to a desired transmission of the electrochromic lens, and this first aspect serves to set the electrochromic eyewear lens to a desired transmission state darker (less transmission) than the fully discharged state. For example, the desired transmission state may be translated to the predefined voltage using a calibration curve for the particular lens. Furthermore, a duration of the applying of the one of a constant charging voltage, constant discharging or short circuit depends on the predefined level: For small changes compared to an actual level, shorter durations are used, and for larger changes (for example for going from the fully discharged state to minimum transmission) a longer duration is used. The duration again may be determined based on a corresponding calibration for the lens.

Eyewear lenses as used herein are lenses which are intended for use in a device to be worn on a head of a person such that the person looks through the lens. An example for an eyewear lens is an ophthalmic lens with refractive properties used for vision corrected. Such ophthalmic lenses are usually carried by spectacle frames, including rimless spectacle frames. In other embodiments, the lens may be a lens for sunglasses with adjustable transmission. In yet other embodiments, the lens may be a lens for virtual reality (VR) or augmented reality (AR) glasses, i.e. glasses that allow a person to view displayed data (including text, images, symbols etc.) , either alone (VR) or superimposed with the surroundings of the person (AR). Apart from using driving techniques as discussed in this application, such VR or AR glasses may be implemented in a conventional manner. Electrochromic eyewear lenses will also be shortly be referred to as electrochromic lenses or simply lenses in the following.

Charging the electrodes means that a greater voltage is applied to the electrochromic material, which for usual electrochromic materials means that the transmission is reduced (darker state). Therefore, for such electrochromic materials the above method according to the first aspect may be used to set the electrochromic lens to a darker state.

Conversely, discharging means that the voltage applied to the electrodes is reduced, which may be effected by applying a discharging voltage (voltage with a level smaller than an actual voltage level) or by short-circuiting the electrodes. If one of the electrodes is taken as a reference level (0V), short-circuiting may also be seen as applying a discharging voltage of 0V.

By applying the current via the current limiting element after the constant charging voltage, cosmetic inhomogeneities may be reduced. Furthermore, the use of the current limiting element reduced current consumption in this phase.

A current limiting element is an element which limits the current flowing compared to a case where the current limiting element is absent. A typical current limiting element is a resistor. However, other elements that effectively reduce the current may also be used, for example diodes, transistors or combinations of such elements.

Preferably, the current limiting element has an effective resistance of 1 Kiloohm or more, more preferably 3 or 5 Kiloohm or more. This allows the providing of a small current, which is preferably in below 1mA, for example between 30 and 500µA, more preferably between 30 and 100µA. With such small currents, the reduction of inhomogeneities is improved.

The effective resistance is the ratio between voltage applied to the electrodes via the current limiting element and the current flowing. In case of a resistor as current limiting element, the effective resistance is the resistance of the resistor.

The magnitude of the charging voltage may be selected based on the electrochromic material used and may be at or near a maximum voltage possible for the material without causing degradation. A duration of the application of the charging voltage may be based on calibration data, i.e. measurement data indicating a duration necessary for achieving a desired transmission change. A duration of the application of the charging voltage may also depend from external parameters like temperature. Furthermore, in some embodiments, the application of the constant charging voltage and the limited current may be repeated until a target voltage or target transmission is reached.

Applying the current via the current limiting element may apply a variable voltage to the electrodes, e.g. in contrast to the constant charging or discharging voltage. For example, in a preferred embodiment for control, applying the current may comprise:
starting applying the current via the current limiting element when a voltage at the electrodes reaches a first threshold value from above, and
stopping applying the current via the current limiting element when the voltage at the electrodes reaches a second threshold value higher than the first threshold value from below.

In this way the voltage at the electrodes is kept between the first threshold value and the second threshold value, such that the transmission may be kept in a narrow range. The predefined voltage level mentioned above. i.e. the target voltage for a certain transmission, may be between the first and second threshold values.

Applying the constant charging voltage or discharging voltage may comprise coupling a power source to the electrodes via a first path not comprising the current limiting element, and in that applying the current via the current limiting element comprises coupling the power source to the electrodes via a second path comprising the current limiting element. In this way, the same power source may be used both for the constant charging or discharging voltage and the applying of the current. A power source is a source of electrical power, for example a battery, that provides voltage and current.

According to a second aspect, a method suitable for driving an electrochromic eyewear lens comprising electrochromic material between electrodes is provided, comprising, for fully discharging the electrodes:
- short-circuiting the electrodes, characterized by
- applying a negative refreshing voltage to the electrodes after the short-circuiting.

This second aspect is therefore used to bring the electrodes to a fully discharged state.

In other words, for discharging the electrodes, first the electrodes are short-circuited. This essentially brings the voltage between the electrode to zero. Then a negative refreshing voltage is applied. The method according to the second aspect in typical electrochromic materials may be used set the electrochromic material to a maximum transmission state.

The short-circuiting may extend the stability of the electrochromic material, while the applying of the negative refreshing voltage may improves the cosmetic appearance by removing local residual color. Furthermore, the applying of the negative refreshing voltage may remove the tendency for a tint like a yellow tint in ITO materials.

A negative refreshing voltage is a voltage having an opposite polarity to the charging voltage mentioned above.

The above first aspect and second aspect may be combined, to provide a method enabling both setting the electrodes to a voltage level above a fully discharged state and to fully discharge the electrodes. In such a combination, a duration of applying the negative refreshing voltage is selected depending on a duration of the applying one of a constant charging voltage, discharging voltage or short circuit. For example, the length of periods of applying the one of the constant charging voltage, constant discharging voltage or short circuit prior to the fully discharging may be recorded, and the duration of applying the negative refreshing voltage may be selected accordingly based on a calibration. This adapts the refreshing (e.g. for removal of color tints) to the previous periods that may cause such color tints. Typically, for longer lengths of periods, also longer durations of applying the negative refreshing voltage are used.

A corresponding driver device suitable for driving an electrochromic eyewear lens comprising electrochromic material between electrodes is also provided, comprising a power generating circuit configured to apply a voltage to electrodes of the electrochromic eyewear lens and a controller configured to control the power generating circuit to perform any of the above methods is also provided. The power generating circuit may also disconnect any voltage from the electrodes (open lead state) or short circuit the electrodes, and apply a current via a current limiting element.

A power generating circuit generally is an entity that provides electrical power (i.e. voltage and current) to the electrodes and may for example include a battery (rechargable or non-rechargeable) or other source of electrical power like a solar cell.

Spectacles with at least one electrochromic eyewear lens, in particular two electrochromic eyewear lenses, and the driver device are also provided. In case of two electrochromic lenses, the driver device may drive the electrochromic eyewear lenses individually to take different behaviors into account, e.g. based on different calibrations.

A computer program for a controller of a driver device suitable for driving an electrochromic eyewear lens is also provided, which, when executed by the controller, causes the controller to control a power generating circuit to perform any method the first aspect or second aspect explained above. The computer program may be provided on a tangible storage medium like a flash memory, a compact disc (CD), a digital versatile disc (DVD), or a read only memory (ROM). The computer program may also be provided as a data carrier signal.

For further illustration, embodiments will now be described referring to the attached drawings, wherein:
Fig. 1A is a diagram illustrating a system including a driver device according to an embodiment,
Figs. 1B to 1D show various configurations of coupling a power source to an electrochromic eyewear lens,
Fig. 2 is a flow chart illustrating a method according to an embodiment,
Figs. 3A and 3B are signal diagrams for illustrating the method of Fig. 2,
Fig. 4 are diagrams of eyewear lenses in various states for illustrating effects of the embodiment of Fig. 2,
Fig. 5 show spectacles according to embodiments,
Fig. 6 illustrates deposition of indium tin oxide, and
Figs. 7A and 7B illustrate problems associated with conventional driving schemes.

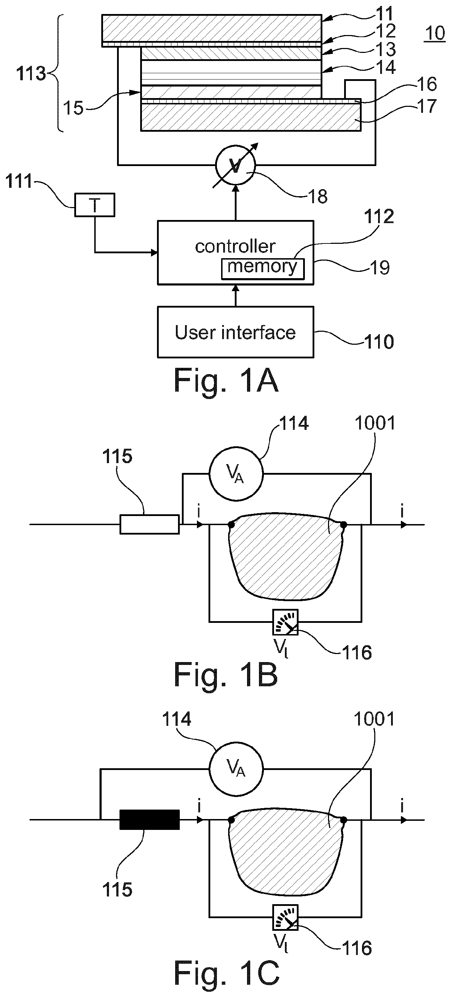

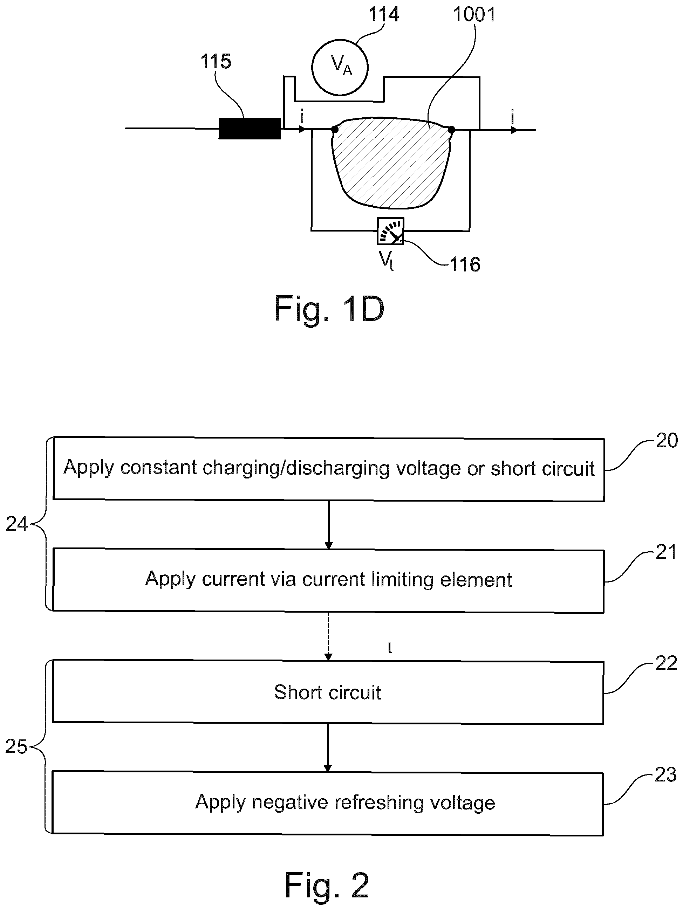

Fig. 1 is a diagram illustrating a system 10 according to an embodiment, including a driver device according to an embodiment.

System 10 of Fig. 1 comprises an example of a material stack 113 including a substrate 11, a first electrode 12 made of indium tin oxide (ITO) or another transparent conducting material, a first layer 13 of electrochromic material, a solid-state electrolyte layer 14 which serves as a drift layer for ions, a second electrochromic layer 15, a second electrode 16 which again may be made of ITO, and a transparent cap layer 17. Substrate 11 in the embodiment described herein relating to eyewear lenses may for example be a lens material, or substrate 11 and cap layer 17 may be material of the lens between which the other layers 12 to 16 are sandwiched, i.e. may be made of the same material. The lens may be an ophthalmic lens for spectacles.

Electrically speaking, layers 12 to 16 essentially form a device including a capacitor with an additional parallel resistance and inductor, with electrodes 12, 16 which may be charged or discharged. A transmission of electrochromic material layers 13, 15 depends on the voltage between electrodes 12, 16.

For charging or discharging the capacitor, a driver device including a power generating circuit 18, and a controller 19 is provided. Power generating circuit 18 is adjustable to apply either a charging voltage, a discharging voltage or a negative refreshing voltage between electrodes 12, 16. The charging voltage serves to charge the capacitor, thus increasing the voltage applied to electrochromic layers 13, 15, and the discharging voltage serves to discharge the capacitor by a discharge current, thus lowering the voltage applied to electrochromic layers 13, 15. This in turn changes the transmission. Power generating circuit 18 further may include a voltmeter to measure the voltage between electrodes 12, 16, in particular an open lead voltage where the voltage generation is disconnected. Power generating circuit 18 is also capable of disconnecting electrodes 12, 16 (open lead state) or connecting electrodes 12, 16 (short circuit).

In this application, a charging voltage will be represented as a positive voltage and a negative refreshing voltage as negative voltage, which means that 0V is when both electrodes 12, 16 are at the same potential. In other words, e.g. a voltage level at electrode 16 may be taken as 0V, and the voltage level at electrode 12 may be positive e.g. for charging and negative for discharging or refreshing. An example implementation will be explained below referring to Figs. 1B to 1D.

In the embodiment of Fig. 1, controller 19 controls power generating circuit 18 to apply voltages and currents according to a scheme that will be explained in more detail referring to Figs. 1B to 1D and Fig. 2 below.

Controller 19 may include a memory 112 storing calibration data for electrochromic stack 113, and for example a voltage for charging a duration of voltage may be selected based on the calibration data. To compensate for temperature variations, a temperature sensor 111 may be provided, and controller 19 may adapt the control according to temperature, for example as described in US 2019/0221148 A1. Calibration data may also be used to determine a duration of the negative refreshing voltage, as already explained above.

Furthermore, system 10 comprises a user interface 110 allowing a user to control the system, for example to increase or decrease the transmission. User interface 110 may for example include two touch sensors, one for reducing the transmission and one for increasing the transmission. In other embodiments, instead or in addition to a user interface, a sensor sensing ambient light conditions like a phototransistor or a photodiode may be provided, and the transmission may be of electrochromic material layers, 13, 15 may be controlled based on the ambient light conditions.

Fig. 2 is a flow chart of a method according to an embodiment, which is implemented using controller 19 controlling voltage generation circuit 18 accordingly.

The method of Fig. 2 describes a charging operation 24 and a full discharging operation 25. The charging operation 24 is be used to increase a voltage between electrodes 12, 16, leading to a lower transmission, and the full discharging operation 25 is used to reduce the voltage to zero, which increases the transmission to a maximum.

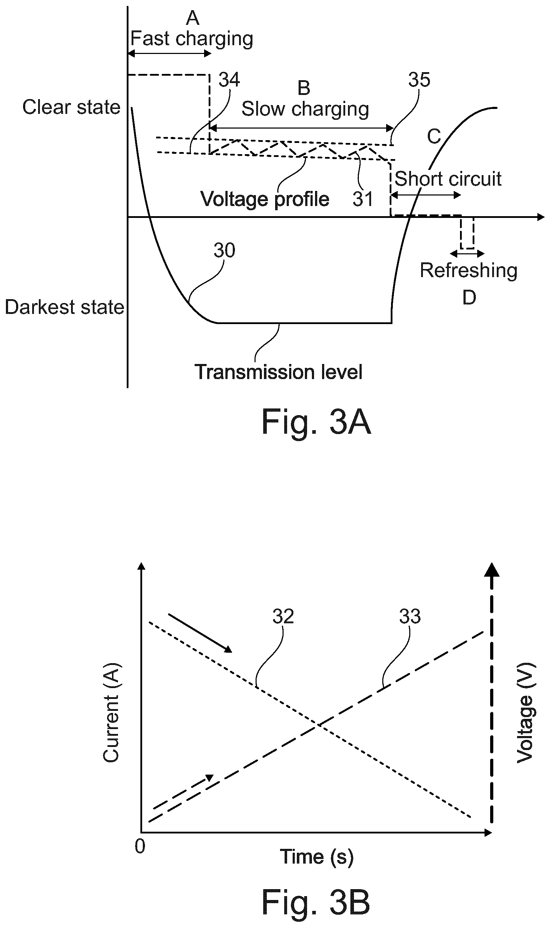

Charging operation 24 includes steps 20 and 21, and full discharging operation 25 includes steps 22 and 23. Steps 20 to 23 will be described referring additionally to Figs. 3A and 3B, which shows a voltage profile 31 and a transmission level profile 30 as an example when the method of Fig. 2 is applied, and to Figs. 1B to 1D.

In step 20 of Fig. 2, the method comprises applying a constant charging voltage to electrodes 12, 16. This corresponds to section A of Fig. 3A, where according to curve 31 a comparatively high constant voltage is applied. This leads to a fast decrease of transmission according curve 30 and can be seen as fast charging.

Fig. 1B shows a corresponding configuration of power generating circuit 18 of Fig. 1A during step 20. A power source 114, e.g. a battery, of power generating circuit 18 directly applies the charging voltage to electrodes (e.g. 12, 16) of an electrochromic lens 1001, leading to a high charging current i. A voltage V_{I} across the electrodes can be measured using a voltmeter 116. A resistor 115 serving as current limiting element is not used, i.e. excluded from a path coupling power source 114 to electrochromic lens 1001. Power source 114 for charging may for example provide a voltage between 1V and 2V, for example 1.6 V.

Following this, at a step 21 of Fig. 2, the method comprises applying a current via a current limiting element at a lower charging voltage. This corresponds to section B of Fig. 3A, where a lower current is applied with a varying voltage profile.

Fig. 1C shows a corresponding state of power generating circuit 18. Here. Power source 114 is coupled to the electrodes of electrochromic lens 1001 via resistor 115 serving a current limiting element. Resistor 115 may have a resistance of about 7 Kiloohm, leading to a low current in the range of some 10µA.

As can be seen in Fig. 3A, in the implementation shown the voltage increases and decreases. This may be effected by starting the provision of the current (turning on power source 114 of Fig. 1B) when the voltage measured by voltmeter 116 reaches a first threshold value 34 from above, and stopping provision of the current when the voltage reaches a second threshold value 35 from below. This keeps the voltage in a narrow band around the target voltage.

Fig. 3B shows a section of this part in more detail where according to a curve 33 the voltage increases and the current according to curve 32 decreases. If V_{I} is the voltage across the electrodes and V_{A} is the voltage provided by power source 114, the voltage drop across resistor 115 is V_{A}-V_{I}, and the current i flowing is i=( V_{A}-V_{I})/R, where R is the resistance of resistor 115. Therefore, when the lens is charged and V_{I} increases, the current i decreases, as shown in Fig. 3B.

To give a numerical example, if the voltage V_{A} is 1.6 V and the threshold values are 1.15V and 1.23V, respectively, with R=7 Kiloohm the current i would vary between about 53 µA and about 64µA.

Such a small variable current values allow to equilibrate to charge distribution on different impedance areas formed for example by inhomogeneous ITO deposition, as explained in the introductory portion with respect to Fig. 6. In this way, this step 21 serves to reduce cosmetic defects and establishes a uniform transmission.

Step 21 may also be applied if step 20 discharges the electrode to go to a higher transmission, but still above the fully discharged state, for example if discharging to go from fully dark (lowest transmission) to a state between fully dark and maximum transmission.

Between step 21 and 22, the electrodes may be disconnected from power generating circuit 18 for an open lead state where an open lead voltage is maintained.

To fully discharge the electrodes and go to a maximum transmission state, at step 22 the method comprises short-circuiting electrodes 12, 16. In Fig. 3A, this corresponds to section C, where due to the short circuit the voltage drops to essentially zero (same voltage level at both electrodes 12, 16 due to the short circuit). This is shown in Fig. 1D, where electrochromic lens is short-circuited. The various configurations of Figs. 1B to 1D may be achieved by providing corresponding switches, e.g. transistor switches.

After step 22, at step 23 a negative refreshing voltage is applied, i.e. a negative voltage pulse, as shown in section D of Fig. 3A. As explained above, a duration of this pulse may be selected based on a duration of step 20 (or multiple steps 20 in case the lens changes between various transmission states before the full discharging of steps 22 and 23) and based on calibration data stored in memory 112.

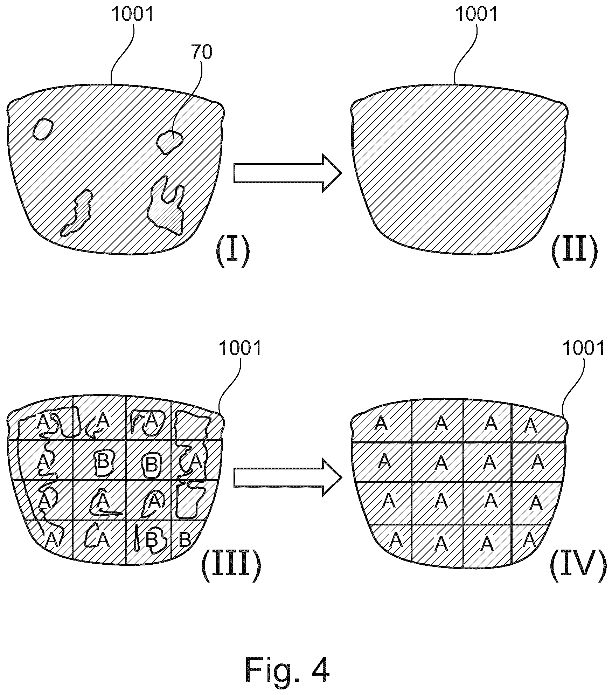

Effects of this control scheme will now be explained with reference to Fig. 4.

In Fig. 4, a spectacle lens 1001 in a state (I) corresponds to a state after step 20 of Fig. 2 or section A of Fig. 3A. Here, cosmetic inhomogeneities 70, colour inhomogeneities, optical inhomogeneities or line structures may be remained, for example due to inhomogeneous ITO deposition as shown in Fig. 6. Through application of step 21 (section B in Fig. 2), these inhomogeneities are removed, as shown in state (II) of Fig. 4.

However, when using ITO some tendency to yellow colouring may result.

State (III) which corresponds to Fig. 7B and may be the state after step 22 has inhomogeneities resulting from the short circuit. Application of the negative refreshing voltage (step 23, section D) reduces or removes such inhomogeneities and also contributes to remove the yellow colouring mentioned above, such that in state (IV) an essentially uniform transmission can be reached.

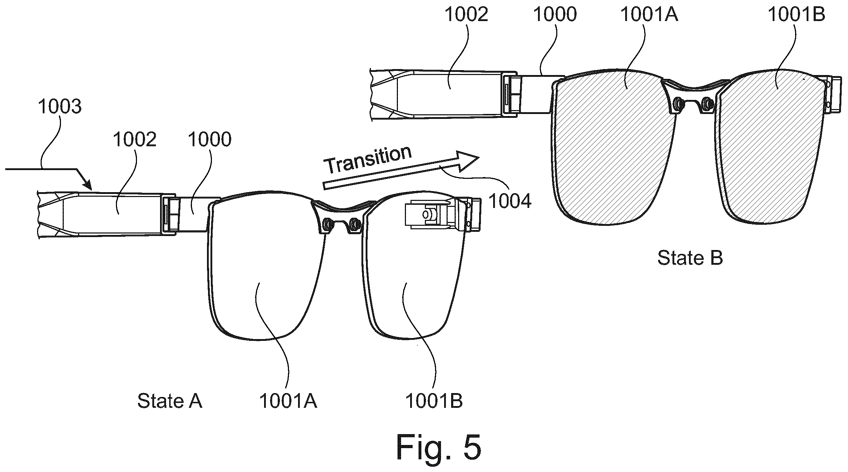

Fig. 5 shows spectacles according to an embodiment in a state A (high transmission) and a state B (low transmission).

The spectacles shown include a spectacle frame 1000 with lenses 1001A, 1001B. Lenses 1001A, 1001B, in the example shown are ophthalmic lenses which include an electrochromic stack as shown in Fig. 1. A driver circuit as discussed with respect to Fig. 1 is incorporated as a driver device 1002 in temple arms of the spectacle frame 1000. By a user input 1003, for example using touch sensors, a transition between state A and state B as indicated by an arrow 1004 (or vice versa) may be performed, and also intermediate states are possible.

By using the driving scheme as explained above with reference to Figs. 2 and 3, driver device 1002 may ensure a homogeneous appearance for both lenses 1001A, 1001B.

## Claims

1. A method suitable for driving an electrochromic eyewear lens (1001, 1001A, 1001B) comprising electrochromic material (13, 15) between electrodes (12, 16), comprising, for charging or discharging the electrodes (12, 16) to a predefined voltage level above a fully discharged state:
- applying one selected from a group consisting of a constant charging voltage, a constant discharging voltage or a short circuit to the electrodes (12, 16), **characterized by**
- applying current via a current limiting element (115) to the electrodes (12, 16) after applying the one selected from the group consisting of the constant charging voltage, constant discharging voltage or short circuit.

2. The method of claim 1, **characterized in that** applying the current via the current limiting element (114) applies a variable voltage to the electrodes (12, 16).

3. The method of claim 2, **characterized in that** the method comprises:
starting applying the current via the current limiting element (115) when a voltage at the electrodes reaches a first threshold value (34) from above, and
stopping applying the current via the current limiting element (115) when the voltage at the electrodes reaches a second threshold value (35) higher than the first threshold value from below.

4. The method of claim 3, **characterized in that** the predefined voltage level is between the first threshold value (34) and the second threshold value (35).

5. The method of any one of claims 1 to 4, **characterized in that** applying the constant charging voltage or discharging voltage comprises coupling a power source (114) to the electrodes (12, 16) via a first path not comprising the current limiting element (115), and **in that** applying the current via the current limiting element comprises coupling the power source to the electrodes via a second path comprising the current limiting element (115).

6. The method of any one of claims 1 to 5, **characterized in that** applying the limited current is configured to mitigate cosmetic imbalances in the electrochromic eyewear lens (1001, 1001A, 1001B).

7. The method of any one of claims 1 to 6, wherein the current limiting element has an effective resistance of above 1 Kiloohm.

8. The method of any one of claims 1 to 7, **characterized by** further comprising, for fully discharging the electrodes (12, 16):
- short-circuiting the electrodes (12, 16) ,
- applying a negative refreshing voltage to the electrodes (12, 16) after the short-circuiting.

9. The method of claim 8, **characterized in that** a duration of applying the negative refreshing voltage is selected depending on a duration of the applying the one selected from the group consisting of the constant charging voltage, the discharging voltage or the short circuit.

10. A method suitable for driving an electrochromic eyewear lens (1001, 1001A, 1001B) comprising electrochromic material (13, 15) between electrodes (12, 16), comprising, for fully discharging the electrodes (12, 16):
- short-circuiting the electrodes (12, 16), **characterized by**
- applying a negative refreshing voltage to the electrodes (12, 16) after the short-circuiting.

11. A driver device suitable for driving an electrochromic eyewear lens (1001A, 1001B), comprising:
a power generating circuit (18) configured to apply a voltage to an electrochromic material (13, 15) of the electrochromic eyewear lens (1001A, 1001B), and
a controller configured to control the power generating circuit (18), for charging or discharging the electrodes (12, 16) to a predefined voltage level above a fully discharged state:
- apply one selected from a group consisting of a constant charging voltage, a constant discharging voltage or a short circuit to the electrodes (12, 16), **characterized in that** the controller (19) is further configured to control the power generating circuit (18) to:
- apply current via a current limiting element (115) to the electrodes (12, 16) after applying the one selected from the group consisting of the constant charging voltage, constant discharging voltage or short circuit.

12. The driver device of claim 11, wherein the controller is configured to control the power generating circuit to perform the method of any one of claims 1 to 9.

13. A driver device suitable for driving an electrochromic eyewear lens (1001A, 1001B), comprising:
a power generating circuit (18) configured to apply a voltage to an electrochromic material (13, 15) of the electrochromic eyewear lens (1001A, 1001B), and
a controller configured to control the power generating circuit (18), for fully discharging the electrodes (12, 16):
- short-circuiting the electrodes (12, 16), **characterized in that** the controller (19) is further configured to control the power generating circuit (18) to:
- apply a negative refreshing voltage to the electrodes (12, 16) after the short-circuiting.

14. Spectacles, **characterized by** comprising:
a spectacle frame (1000),
a first electrochromic eyewear lens (1001A),
a second electrochromic eyewear lens (1001B), and
the driver device of any one of claims 11 to 13 for driving the first and second electrochromic eyewear lenses (1001A, 1001B).

15. A computer program for a controller (19) of a driver device suitable for driving an electrochromic eyewear lens (1001A, 1001B) , which, when executed by the controller (19), causes the controller to control a power generating circuit (18) to perform the method of any one of claims 1 to 10.
